# EUROPEAN PATENT SPECIFICATION

(11) **EP 4 167 608 B1**
(45) Date of publication and mention of the grant of the patent: **10.09.2025**
(21) Application number: 21828725.8
(22) Date of filing: 02.06.2021
(51) Int. Cl.: H04W 4/24, H04L 12/14, H04M 15/00

(54) **CHARGING NOTIFICATION FUNCTION ENTITY, CHARGING FUNCTION ENTITY, CALL DETAIL RECORD PROCESSING METHOD AND APPARATUS, AND STORAGE MEDIUM**
VERGEBÜHRUNGSBENACHRICHTIGUNGSFUNKTIONSEINHEIT, VERGEBÜHRUNGSFUNKTIONSEINHEIT, VERFAHREN UND VORRICHTUNG ZUR VERARBEITUNG VON ANRUFDETAILAUFZEICHNUNGEN UND SPEICHERMEDIUM
ENTITÉ DE FONCTION DE NOTIFICATION DE FACTURATION, ENTITÉ DE FONCTION DE FACTURATION, PROCÉDÉ ET APPAREIL DE TRAITEMENT D'ENREGISTREMENTS DÉTAILLÉS D'APPEL, ET SUPPORT DE STOCKAGE

(30) Priority: 23.06.2020 CN 202010580531
(43) Date of publication of application: 19.04.2023
(73) Proprietor: ZTE Corporation, Shenzhen, Guangdong 518057 (CN)
(72) Inventor: XIE, Liansheng, Shenzhen, Guangdong 518057 (CN)
(74) Representative: Zoli, Filippo
(86) International application number: PCT/CN2021/097870
(87) International publication number: WO 2021/259026

(56) References cited:
- CN-A- 108 123 810
- CN-A- 108 123 810
- CN-A- 110 505 069
- CN-A- 110 740 430
- US-A- 4 935 956
- US-A- 6 134 307
- US-A1- 2020 092 423
- US-B1- 10 531 515
- "3rd Generation Partnership Project; Technical Specification Group Services and System Aspects; Telecommunication management; Charging management; 5G system; Services, operations and procedures of charging using Service Based Interface (SBI) (Release 16)", 3GPP STANDARD; TECHNICAL SPECIFICATION; 3GPP TS 32.290, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V16.2.1, 27 September 2019 (2019-09-27), Mobile Competence Centre ; 650, route des Lucioles ; F-06921 Sophia-Antipolis Cedex ; France , pages 1 - 33, XP051785027
- HUAWEI: "Discussion Paper on CHF cotrolled Quota Management", 3GPP DRAFT; S5-201237, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. e-meeting; 20200224 - 20200304, 14 February 2020 (2020-02-14), Mobile Competence Centre ; 650, route des Lucioles ; F-06921 Sophia-Antipolis Cedex ; France , XP051855829

## Description

### TECHNICAL FIELD

The embodiments of the present invention relate to the technical field of communications, in particular to a charging notify function (CNF) entity, a charging function entity, a call detail record (CDR) processing method and device, and a storage medium.

### BACKGROUND

The charging function is an important function in a communication system. However, when charging for communication services in the communication system, no error correction mechanism is available currently for a faulty CDR file, which may lead to charging errors.

US4935956A discloses that the charge and collect-call functions of a public telephone are arranged automatically by a microcomputer system preferably connected on customer premises between the phone terminal instrument and the local loop, wherein control of said instrument, network signaling and call placement voice prompting of the call parties, recognition of responses from the parties and the network, call detail records of numbers and timings, and data communications with other computers are accomplished by the microcompter system without requiring human operator assistance or the transmission of calls over excessive distances to reach such an operator.

US6134307A provides a method for converting call events. The method includes receiving a plurality of call events from a plurality of sources in a global telecommunications network; converting the plurality of call events a plurality of call event records, the call event records having different destinations; sending a first portion of the plurality of call event records to a first destination; and sending a second portion of the plurality of call event records to a second destination.

CN108123810A provides a wrong bill processing method and device. The method comprises the steps of: obtaining wrong bill information, wherein the wrong bill information is sent through an interface by a link of generating a wrong bill; performing error analysis on the wrong bill information according to a judgement rule, so that error analysis result information is obtained; according to the error analysis result information, obtaining a corresponding repair matching rule from a pre-set rule base matching table, and generating a repair instruction according to the repair matching rule; and, according to the repairing instruction, repairing the wrong bill information, so that repaired bill information is obtained.

US2020092423A1 discloses that an SMF receives from an AMF a PDU session create request message requesting establishment of a PDU session for a wireless device. In response to the PDU session create request message, the SMF sends to a CHF a charging policy request message requesting charging policy information for the PDU session. The SMF receives from the CHF a response message comprising the charging policy information for the PDU session. The charging policy information comprises a first charging method. Based on the charging policy information, the SMF determines a charging control rule for the PDU session. The SMF enforces the charging control rule.

### SUMMARY

The invention is set out in the appended set of claims.

An object of the present invention provides a CDR file processing method, which is applied to a charging function entity, according to claim 1.

An object of the present invention also provides a CNF entity, which is applied to a charging function entity and is used for communication connection with a BOSS. The CNF entity includes a charging exposure service which is configured to be registered on a network repository function entity and to be called by the BOSS through the network repository function entity to realize the above CDR file processing method.

An object of the present invention also provides a charging function entity which is used for communication connection with a BOSS, and the charging function entity includes the above CNF entity.

An object of the present invention also provides a CDR file processing device, which includes a memory, a processor, a program stored in the memory and executable by the processor, and a data bus for realizing connection and communication between the processor and the memory, and the program, when executed by the processor, causes the processor to perform the above method.

An object of the present invention also provides another CDR file processing method, which is applied to a BOSS, according to claim 3.

An object of the present invention provides a computer-readable storage medium storing one or more programs which are executable by one or more processors to implement any of the methods described above. Preferred embodiments are set out in the appended claims.

### BRIEF DESCRIPTION OF DRAWINGS

Fig. 1 is a basic block diagram of a 5G network.
Fig. 2 is a block diagram of a 5G core network.
Fig. 3 is a block diagram of 5G charging implemented in a 3GPP network.
Fig. 4 is a flowchart of charging message interaction in a CDR file processing method provided by an embodiment of the present invention.
Fig. 5 is a block diagram of a charging function entity and other network function entities provided by an embodiment of the present invention.
Fig. 6 is a flowchart of application of a CDR file processing method provided by an embodiment of the present invention to a charging function entity.
Fig. 7 is a flowchart of application of a CDR file processing method provided by an embodiment of the present invention to a BOSS.
Fig. 8 is a flowchart of a BOSS discovering a charging exposure service provided by an embodiment of the present invention.
Fig. 9 is a flowchart of auditing a CDR file by means of a notification message provided by an embodiment of the present invention.
Fig. 10 is a flowchart of auditing a CDR file by means of service calling provided by an embodiment of the present invention.
Fig. 11 is a flowchart of auditing a CDR file by means of a notification message and service calling respectively provided by an embodiment of the present invention.
Fig. 12 is a flowchart of auditing a subscriber CDR by means of a notification message and service calling respectively provided by an embodiment of the present invention.

### DETAILED DESCRIPTION

In order to make the objectives, technical schemes and advantages of the present invention more apparent, the present invention is further described in detail in conjunction with the accompanying drawings and embodiments. It should be understood that the particular embodiments described herein are only intended to explain the present invention, and are not intended to limit the present invention.

It is to be noted that although a division of network function entities is shown in the schematic diagrams of the device and a logical order is shown in the flowcharts, the steps shown or described may be executed, in some cases, in a different module division from that of the device or in a different order from that in the flowcharts.

In the following description, suffixes such as "entity" used to represent elements are only to facilitate the description of embodiments of the present invention, and have no special meanings in themselves.

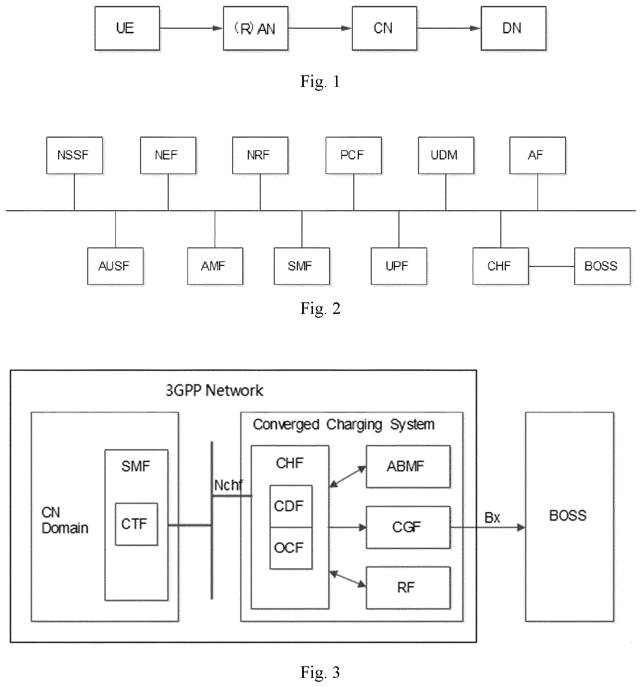

5G (the 5th Generation mobile communication technology) is an extension of LTE (Long Term Evolution), and is configured to provide data connection and services. Referring to Fig. 1, a 5G network includes User Equipment (UE), a (Radio) Access Network ((R)AN), a Core Network (CN) and a Data Network (DN). The UE is configured to access the (R)AN network and establish a PDU session. The CN and the (R)AN are connected, and the DN and the CN are connected.

Referring to Fig. 2, the 5G core network consists of multiple network function entities including a User Plane Function (UPF), a Session Management Function (SMF), an Access and Mobility Management Function (AMF), an Authentication Server Function (AUSF), a Network Slice Selection Function (NSSF), a Network Exposure Function (NEF), a Network Repository Function (NRF), a Policy Control Function (PCF), a Unified Data Management (UDM) function, an Application Function (AF), and a Charging Function (CHF).

Referring to Fig. 3, for the 5G charging function in a 3GPP (the 3rd Generation Partnership Project) network, a CN domain includes the SMF, where the SMF includes a Charging Trigger Function (CTF), and the CTF is configured to collect charging information and send the charging information to the CHF through an Nchf service interface. The CHF includes a Charging Data Function (CDF) and an Online Charging Function (OCF). For offline charging messages, the CDF is responsible for constructing the charging information into a Call Detail Record (CDR) and transmitting the same to a Charging Gateway Function (CGF); for online charging messages, the OCF is responsible for processing the charging information. The OCF interacts with a rating function (RF) and an Account Balance Management Function (ABMF) to realize rating and account balance management; and the CGF is configured to store and manage the CDR received from the CDF, and send CDR files to a charging system of a BOSS through a Bx interface.

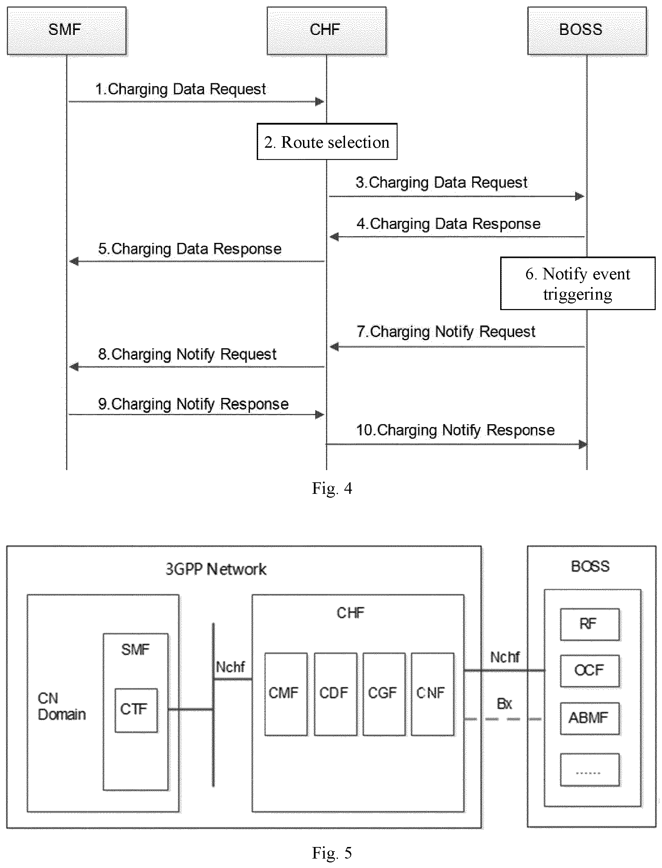

Referring to Fig. 4, an embodiment of the present invention provides the steps of charging message interaction in a CDR file processing method, at least including the following.
1. The UE accesses the (R)AN network, establishes a PDU session, and sends a charging data request message to the CHF. In an implementation, the SMF is configured to send the charging data request message to the CHF through the Nchf interface;
2. The CHF performs route selection according to a subscriber number segment, and selects a BOSS at a subscriber location. In an implementation, the CHF acquires subscriber number information from the charging data request message, and acquires the subscriber number segment based on the subscriber number information. Here, the charging data request message carries the subscriber number information, so the CHF can acquire the subscriber number information from the charging data request message; the CHF can select a BOSS corresponding to the subscriber number segment, that is, the BOSS at the subscriber location; and in some applications, when the NRF is deployed in the network, according to the subscriber number segment, the NRF can find the BOSS at the subscriber location.
3. The CHF forwards the charging data request message to the BOSS. Here, the charging data request message includes a charging creation request message (Nchf_ConvergedCharging_Create), a charging update request message (Nchf_ConvergedCharging_Update) and a charging release request message (Nchf_ConvergedCharging_Release).
4. The BOSS saves the received charging data request message and returns a charging data response message. Here, the charging data response message includes: a charging creation response message (Nchf_ConvergedCharging_Create), a charging update response message (Nchf_ConvergedCharging_Update), and a charging release response message (Nchf_ConvergedCharging_Release).
5. The CHF forwards the charging data response message to the SMF.

Through the above steps 1-5, the transmission of the charging data request message and the charging data response message is completed.

The steps of charging message interaction in the CDR file processing method disclosed in the embodiment at least further include the following.
6. A notify message is triggered. In an implementation, the BOSS initiates a session re-authentication process, and triggers the notify message.
7. The BOSS sends a charging notify request message to the CHF.
8. The BOSS acquires an address of the CHF according to the charging data request message generated previously, and forwards the charging notify request message to the SMF.
9. The SMF sends the charging notify response message to the CHF. Upon receiving the charging notify request message, the SMF processes the notify request and sends the charging notify response message to the CHF. In an implementation, the notify request can be a session re-authentication request.
10. The CHF forwards the charging notify response message to the BOSS.

Through the above steps 6-10, the notify message is triggered, and the transmission of the charging notify request message and the charging notify response message is completed.

Referring to Fig. 5, an embodiment discloses a CHF. In an implementation, the CHF is applied in the 3GPP network. The CHF is used for communication connection with the BOSS and data transmission with the BOSS. The CHF is also used for communication connection with the SMF and data transmission with the SMF to receive a charging message transmitted by the SMF. The CHF includes entities including a Charging Message Function (CMF), a Charging Data Function (CDF), a Charging Gateway Function (CGF) and a Charging Notify Function (CNF). The CTF is embedded in the SMF, and the SMF is configured to, through the embedded CTF: collect charging information according to the network resource usage of a subscriber, and send the charging information to the CHF through the Nchf service interface. The CHF is configured to: receive the charging information of the SMF; construct a CDR according to the received charging information; generate CDR files according to the constructed CDR; transmit the CDR files, and route and forward the charging information to the BOSS, such that the charging system in the BOSS completes the final charging according to the received CDR files and the charging message. Here, the charging message includes an offline charging message and an online charging message; for the offline charging message, the CDF is responsible for constructing the CDR from the charging information, and transmitting the same to the CGF; for the online charging message, the OCF is responsible for processing the charging information, and the OCF interacts with a Rating Function (RF) and an Account Balance Management Function (ABMF) to realize rating and account balance management; and the CGF is configured to store and manage the CDR received from the CDF, and send CDR files to the charging system of the BOSS through a Bx interface for charging. The CHF disclosed in this embodiment can realize multiple functions, including but not limited to: CDR file recovery, CDR file auditing, CDR query, CDR collection and subscriber auditing.

In practical application, the UE accesses the (R)AN network and establishes a PDU session, and the SMF reports a charging message and transmits the same to the CHF, such that the CHF can realize multiple functions as follows. The CHF is configured to:
- construct a CDR according to a charging message, and generate CDR files according to the CDR; and
- transmit the CDR files to a BOSS, where the boss is configured to send a recovery and re-acquisition request according to the CDR files. In an implementation, the CDR files are transmitted to the BOSS through a Bx interface; upon receiving the CDR files transmitted by the CHF, the BOSS processes the received CDR files, and in response to the existence of erroneous CDR files, the BOSS sorts out the erroneous CDR and sends the recovery and re-acquisition request to the CHF;
- acquire a list of erroneous CDR files according to the recovery and re-acquisition request sent by the BOSS; and
- recover all erroneous CDR files in the list of erroneous CDR files from a backup CDR file directory, where the BOSS is used for re-acquiring the recovered CDR files. Therefore, the BOSS can re-acquire the recovered CDR files from the CHF.

In an embodiment, before step 601, the CHF is further configured to: receive a charging message transmitted by the SMF. Therefore, the CHF can construct a CDR according to the received charging message and generate CDR files according to the CDR.

In an embodiment, in order to check and correct the charging information and improve the real-time performance and accuracy of charging, the CHF is also configured to: receive a CDR file auditing request sent by the BOSS, here, the BOSS sends the CDR file auditing request to the CHF according to the received CDR files; and return the CDR file auditing information to the BOSS according to the received CDR file auditing request, here, the BOSS is configured to verify the correctness of the CDR files according to CDR file auditing information returned by the CHF.

In an embodiment, in order to further audit and correct the charging information and improve the real-time performance and accuracy of charging, the CHF is also configured to audit a subscriber CDR: receive a subscriber CDR auditing request sent by the BOSS, here, in response to the existence of a suspicious subscriber CDR, the BOSS sends the subscriber CDR auditing request to the CHF; and the CHF returns charging information of a subscriber for which auditing is to be performed to the BOSS according to the received subscriber CDR auditing request, here, the BOSS is configured to verify the charging information of the subscriber for which auditing is to be performed returned by the CHF.

In some examples, the CNF is used for communication connection with the BOSS, the CNF includes a charging exposure service (Nehf_ChargingExposure service), and the CNF is configured to assemble all functions of the CHF into the charging exposure service (Nehf_ChargingExposure service). In an implementation, the charging exposure service (Nehf_ChargingExposure service) is configured to be registered on the Network Repository Function (NRF) entity, such that the charging exposure service (Nehf_ChargingExposure service) can be configured to be called by the BOSS through the NRF to realize all the functions of the above CHF. In actual application, the charging exposure service (Nehf_ChargingExposure service) is registered on the NRF and provided to the BOSS or a third-party system through a Service-Based Interface (SBI). The BOSS or the third-party system discovers and calls the charging exposure service (Nehf_ChargingExposure service) through the NRF, such that the corresponding functions of the CHF can be flexibly and conveniently called, and then all the functions of the CHF can be realized through service calling, thus avoiding the situation that only CHF itself can use all the functions of the CHF.

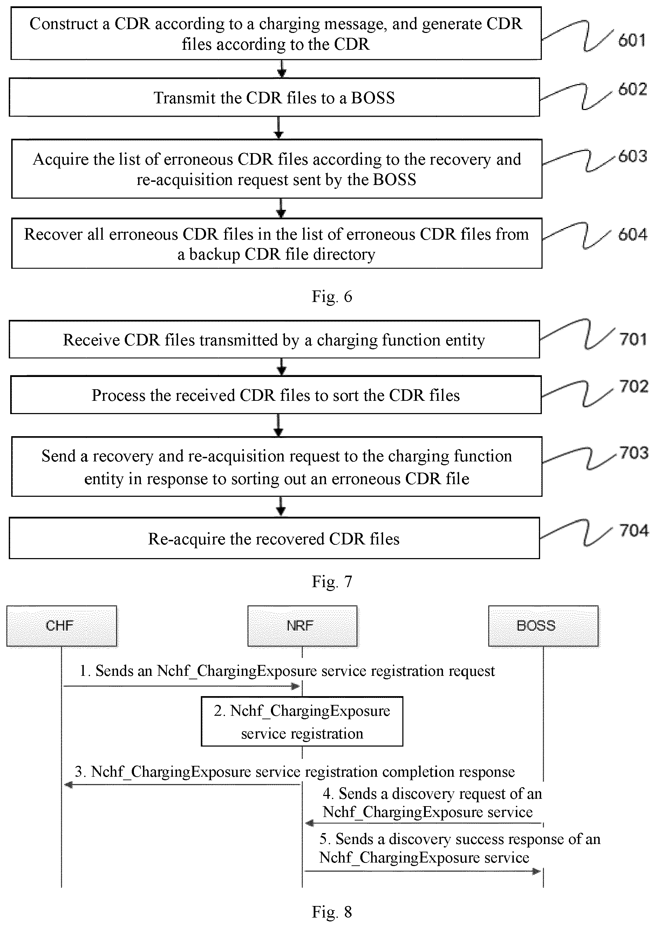

Referring to Fig. 6, an embodiment of the present invention provides a CDR file processing method, which is applied to the CHF, where before the implementation of the CDR file processing method, the UE accesses the (R)AN network and establishes a PDU session, and the SMF reports charging information and transmits the same to the CHF. The CDR file processing method applied to the CHF at least includes the following steps.

At 601, a CDR is constructed according to a charging message, and CDR files are generated according to the CDR.

At 602, the CDR files are transmitted to a BOSS. Here, the boss is configured to send a recovery and re-acquisition request according to the CDR files. Here, the BOSS is configured to process the received CDR files, sort the CDR files, and send a recovery and re-acquisition request to the CHF in response to sorting out erroneous CDR files. Upon receiving the CDR files transmitted by the CHF, the BOSS processes the received CDR files and sorts the CDR files, and in response to the existence of erroneous CDR files, the BOSS sorts out erroneous CDR files and sends the recovery and re-acquisition request to the CHF. Here, the recovery and re-acquisition request contains a list of erroneous CDR files. In an implementation, the CDR files are transmitted to the BOSS through a Bx interface.

At 603, the list of erroneous CDR files is acquired according to the recovery and re-acquisition request sent by the BOSS. The CHF parses the recovery and re-acquisition request sent by the BOSS to acquire the list of erroneous CDR files in the recovery and re-acquisition request.

At 604, all erroneous CDR files in the list of erroneous CDR files are recovered from a backup CDR file directory.

After 604, the BOSS can re-acquire the recovered CDR files from the CHF.

In an embodiment, before 601, the CDR file processing method further includes: receiving a charging message transmitted by the SMF. Therefore, the CHF can construct a CDR according to the received charging message and generate CDR files according to the CDR.

In an embodiment, in order to audit and correct the charging information and improve the real-time performance and accuracy of charging, before 603, the CDR file processing method further includes a CDR file auditing step, which includes:
- receiving a CDR file auditing request sent by the BOSS; where the BOSS sends the CDR file auditing request to the CHF according to the received CDR files; and
- returning the CDR file auditing information to the BOSS according to the received CDR file auditing request, where the BOSS is configured to verify the correctness of the CDR files according to CDR file auditing information returned by the CHF.

In an embodiment, in order to further audit and correct the charging information and improve the real-time performance and accuracy of charging, before 603, the CDR file processing method further includes a subscriber CDR auditing step, which includes:
- receiving a subscriber CDR auditing request sent by the BOSS, here, in response to the existence of a suspicious subscriber CDR, the BOSS sends the subscriber CDR auditing request to the CHF; and
- the CHF returns charging information of a subscriber for which auditing is to be performed to the BOSS according to the received subscriber CDR auditing request, here, the BOSS is configured to verify the charging information of the subscriber for which auditing is to be performed returned by the CHF, so as to verify the correctness of the charging information of the subscriber to be audited.

Referring to Fig. 7, an embodiment of the present invention provides a CDR file processing method, which is applied to the BOSS, where before the implementation of the CDR file processing method, the UE accesses the (R)AN network and establishes a PDU session, the SMF reports charging information and transmits the same to the CHF, and the CHF receives the charging information transmitted by the SMF, constructs a CDR according to the received charging information, generates CDR files according to the CDR, and transmits the CDR files to the BOSS. The CDR file processing method applied to the BOSS at least includes the following steps.

At 701, the CDR files transmitted by the CHF are received.

At 702, the received CDR files are processed and sorted.

At 703, a recovery and re-acquisition request is sent to the CHF in response to sorting out an erroneous CDR file. Here, the recovery and re-acquisition request contains a list of erroneous CDR files, and the CHF parses the recovery and re-acquisition request sent by the BOSS to acquire the list of erroneous CDR files in the recovery and re-acquisition request. Here, the CHF is also configured to recover all erroneous CDR files in the list of erroneous CDR files from a backup CDR file directory.

At 704, the recovered CDR files are re-acquired.

In an embodiment, in order to audit and correct the charging information and improve the real-time performance and accuracy of charging, before 702, the CDR file processing method further includes a CDR file auditing step, which includes:
- sending a CDR file auditing request to the CHF according to the received CDR files, where the CHF is configured to return CDR file auditing information to the BOSS according to the CDR file auditing request; and
- verifying the correctness of the CDR files according to CDR file auditing information returned by the CHF.

In some implementations, in order to improve the real-time performance and accuracy of charging, the CDR files are audited by means of a notification request message, the step of auditing the CDR files by means of a notification request message includes the following sub-steps:
- an address of the CHF is acquired according to the received CDR files;
- the notification request message is sent to the CHF at the corresponding address according to the acquired address; here, the notification request message is filled in by the BOSS, and the notification request message includes a CDR file auditing instruction which includes a list of CDR files; after receiving the notification request message, the CHF identifies the CDR file auditing instruction in the notification request message, acquires CDR file information according to the CDR file auditing instruction, sends a notification response message to the BOSS, and returns the CDR file auditing information according to the acquired CDR file information; in some examples, the CDR file information can include, but is not limited to: the name, size, number and modification time of CDR files; and
- the correctness of the CDR files is verified according to CDR file auditing information returned by the CHF.

In an embodiment, in order to further audit and correct the charging information and improve the real-time performance and accuracy of charging, step 702 includes a subscriber CDR auditing step, which includes the following sub-steps:
- in response to the existence of a suspicious subscriber CDR, a subscriber CDR auditing request is sent to the CHF, where the CHF is configured to return the charging information of a subscriber for which auditing is to be performed according to the subscriber CDR auditing request; and
- the charging information of the subscriber for which auditing is to be performed returned by the CHF is verified. In this way, the correctness of the charging information of the subscriber for which auditing is to be performed is verified.

In some implementations, in order to improve the real-time performance and accuracy of charging, subscriber CDR auditing is realized by means of a notification request message (Notify), step 702 includes the following sub-steps:
- in response to the existence of a suspicious subscriber CDR, the address of the CHF is acquired;
- the notification request message is sent to the CHF at the corresponding address according to the acquired address; here, the notification request message is filled in by the BOSS, and the notification request message includes a subscriber CDR auditing instruction which includes subscriber information, such as subscriber number segment; after receiving the notification request message, the CHF identifies the subscriber CDR auditing instruction in the notification request message, and acquires subscriber credit information to be audited according to the subscriber CDR auditing instruction, sends a notification response message to the BOSS, and returns the acquired subscriber credit information to be audited; in some examples, the subscriber credit information to be audited can include, but is not limited to: service ID, rating group, session duration and traffic information; and
- the subscriber credit information to be audited returned by the CHF is verified.

It can be understood that in order to improve the real-time performance and accuracy of charging, in another embodiment, subscriber CDR auditing is realized by calling a charging exposure service, step 702 includes:
- in response to the existence of a suspicious subscriber CDR, a subscriber CDR auditing sub-service of the charging exposure service of the CHF is called; here, the subscriber CDR auditing sub-service of the charging exposure service is called to auditing the subscriber CDR, so as to return the charging information of the subscriber for which auditing is to be performed through the CHF; after subscriber CDR auditing is completed, the CHF will send a service call completion response to the BOSS;
- the service call completion response sent by the CHF and the returned charging information of the subscriber for which auditing is to be performed are received; and
- the subscriber credit information to be audited returned by the CHF is verified.

According to the CNF entity, the CHF entity and the CDR processing method provided by the embodiments of the present invention, the CDR is constructed according to the charging message, the CDR files are generated according to the CDR, the CDR files are transmitted to the BOSS, the BOSS sends the recovery and re-acquisition request according to the CDR files, so as to acquire the list of erroneous CDR files according to the recovery and re-acquisition request sent by the BOSS, and recover all the erroneous CDR files in the list of erroneous CDR files from the backup CDR directory, such that the erroneous CDR files can be recovered, and then the BOSS can re-acquire the recovered CDR files, which helps improve the accuracy of subsequent charging according to the CDR files.

In some embodiments, CDR file processing can be realized through Notify or service calling; CDR file auditing can be realized through Notify or service calling; and subscriber CDR auditing can be realized through Notify or service calling. Detailed description will be made below with practical embodiments.

In an implementation, when the NRF is deployed in the network and the BOSS discovers the charging exposure service (Nchf ChargingExposure service), the recovery and re-acquisition request sent by the BOSS is a service call request; and in other embodiments, when no NRF is deployed in the network, the recovery and re-acquisition request sent by the BOSS is a Notify request.

In practical application, the UE accesses the (R)AN network and establishes a PDU session, the SMF reports charging information and transmits the same to the CHF, and the CDR file processing method at least includes the following steps:
- the CHF receives the charging message transmitted by the SMF;
- the CHF constructs a CDR according to the receive charging message and generates CDR files;
- the CHF transmits the CDR files to a BOSS; in an implementation, the CDR files are transmitted to the BOSS through a Bx interface;
- the BOSS receives the CDR files transmitted by the CHF;
- the BOSS processes the received CDR files;
- the BOSS sends a recovery and re-acquisition request to the CHF in response to the BOSS sorting out erroneous CDR files;
- the CHF receives the recovery and re-acquisition request sent by the BOSS;
- the CHF acquires a list of erroneous CDR files according to the recovery and re-acquisition request;
- the CHF recovers all erroneous CDR files in the list of erroneous CDR files from a backup CDR file directory; and
- the BOSS re-acquires the recovered CDR files.

Referring to Fig. 8, in an embodiment, discovering the charging exposure service at least includes the following steps.
1. the CHF sends a registration request of the Nchf_ChargingExposure service to the NRF; and the charging exposure service can be used, but not limited to, to realize: CDR file recovery, CDR file auditing, CDR query, CDR collection and subscriber auditing.
2. The Nchf_ChargingExposure service is registered through the NRF.
3. The NRF sends a registration completion response of the Nchf_ChargingExposure service to the CHF.
4. The BOSS sends a discovery request of the Nchf_ChargingExposure service to the NRF.
5. The NRF sends a discovery success response of the Nchf_ChargingExposure service to the BOSS.

In an implementation, the CDR file processing method further includes the following steps:
- in response to the BOSS sorting out erroneous CDR files, the BOSS determines whether the NRF is deployed in the network;
- in response to the BOSS determining that the NRF is deployed in the network, the BOSS looks for the charging exposure service;
- in response to the BOSS discovering the charging exposure service, the BOSS calls the charging exposure service and calls a CDR file recovery sub-service in the charging exposure service, that is, the call mode is CDR file recovery;
- the CHF receives a call request, and acquires a list of erroneous CDR files according to the call request;
- the CHF recovers corresponding CDR files from the backup CDR file directory to an acquisition directory;
- the BOSS acquires the CDR files and performs recharging; and
- in response to the BOSS determining that no NRF is deployed in the network, the BOSS acquires the address of the CHF and sends a Notify request message to the corresponding CHF according to the acquired address, where the BOSS fills in a notification type of the Notify message as CDR file re-acquisition, and fills in a list of CDR files needing re-acquisition;
- after receiving the Notify request message, the CHF forwards the Notify message to a CNF unit in response to the Notification type being identified as a CDR file recovery and re-acquisition message, and the CNF unit further recovers the corresponding CDR file from the backup CDR file directory of the CHF to the acquisition directory for further acquisition by the BOSS according to the list of erroneous CDR files in the Notify message; and
- the CHF responds to the BOSS and returns CDR file recovery completion information, and the BOSS acquires the CDR files and performs recharging.

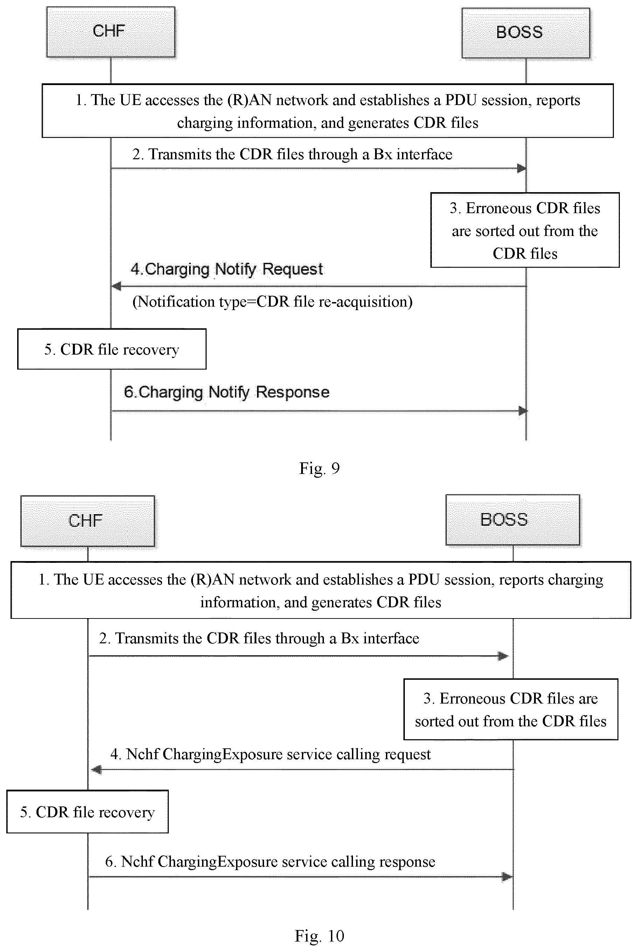

Referring to Fig. 9, in actual application, in response to no NRF being deployed in the network, the CDR file processing method provided in this application can be realized by means of a Notify message, which at least includes the following steps.
1. The UE accesses the (R)AN network and establishes a PDU session, reports charging information and transmits the same to the CHF, and the CHF receives the message to construct a CDR and generates CDR files.
2. The CHF transmits the CDR files to the BOSS through a Bx interface.
3. The BOSS sorted out erroneous CDR files from the CDR files. The BOSS processes the charging CDR files and sorts out the erroneous CDR files, thus triggering a CDR file recovery and re-acquisition request.
4. The BOSS sends a Charging Notify Request to the CHF, and the Notification type is CDR file re-acquisition. The BOSS acquires the address of the CHF, and fills in the Charging Notify Request, the Notification type and a list of CDR files to be re-acquired, where the Notification type is filled in as CDR file re-acquisition, such that the BOSS sends the Charging Notify Request to the CHF.
5. The CHF recovers the CDR files. After receiving the Charging Notify Request, the CHF forwards the Charging Notify Request to the CNF in response to the Notification type being identified as a CDR file recovery and re-acquisition message, the CNF further recovers all the erroneous CDR files in the list of erroneous CDR files from the backup CDR file directory according to the list of erroneous CDR files in the Charging Notify Request, such that the recovered CDR files can be further acquired by the BOSS.
6. The CHF sends a Charging Notify Response to the BOSS, and returns CDR file recovery completion information, and the BOSS acquires the recovered CDR files and performs recharging.

Referring to Fig. 10, in actual application, if NRF is deployed in the network and the BOSS discovers a charging exposure service, the CDR file processing method provided in this application can be realized through service calling, which at least includes the following steps.
1. The UE accesses the (R)AN network and establishes a PDU session, reports charging information and transmits the same to the CHF, and the CHF receives the message to construct a CDR and generates CDR files.
2. The CHF transmits the CDR files to the BOSS through a Bx interface.
3. The BOSS sorted out erroneous CDR files from the CDR files. The BOSS processes the charging CDR files and sorts out the erroneous CDR files, thus triggering a CDR file recovery and re-acquisition request.
4. The BOSS sends an Nchf_ChargingExposure service call request to the CHF, and the call mode is CDR file recovery, that is, a CDR file auditing sub-service of the charging exposure service is called.
5. The CHF recovers the CDR files. After receiving the service call request, the CHF recovers all the erroneous CDR files in the list of erroneous CDR files from the backup CDR file directory according to the list of erroneous CDR files in the request message, such that the recovered CDR files can be further acquired by the BOSS.
6. The CHF sends an Nchf_ChargingExposure service call completion response to the BOSS, and returns CDR file recovery completion information, and the BOSS acquires the recovered CDR files and performs recharging.

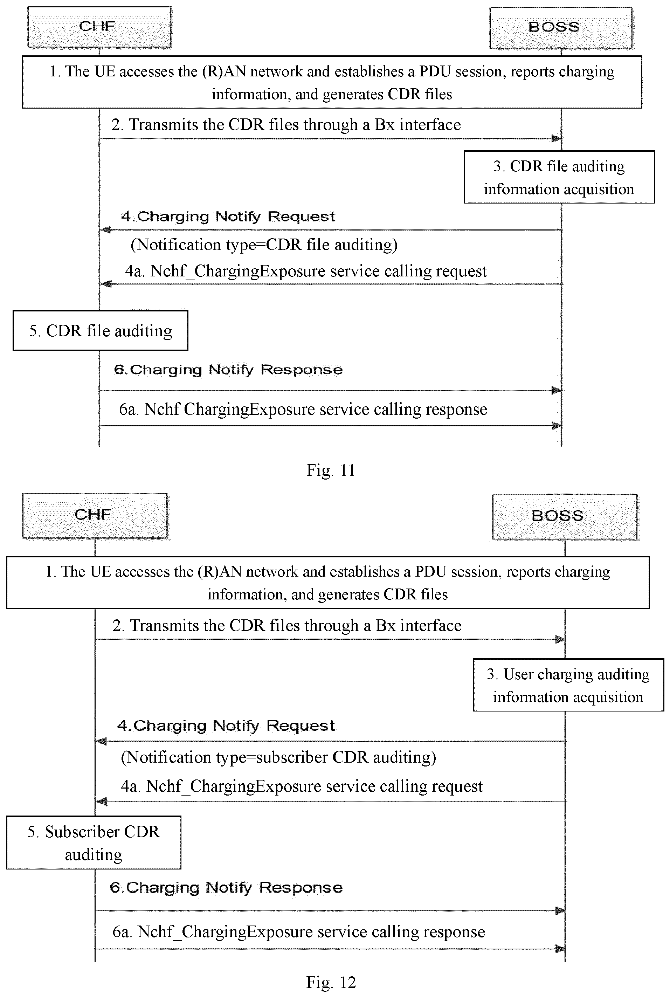

Referring to Fig. 11, in practical application, the CDR file processing method provided by this application also includes CDR file auditing, which can be realized through Notify or service calling, where CDR file auditing through Notify at least includes the following steps 1, 2, 3, 4, 5, 6. CDR file auditing through service calling at least includes the following steps 1, 2, 3, 4a, 6a.

CDR file auditing at least includes the following steps.

At S1, the UE accesses the (R)AN network and establishes a PDU session, reports charging information and transmits the same to the CHF, and the CHF receives the message to construct a CDR and generates CDR files.

At S2, the CHF transmits the CDR files to the BOSS through a Bx interface.

At S3, the BOSS acquires CDR file auditing information. Before processing charging CDR files, the BOSS audits the received CDR files and triggers a CDR file auditing request.

At S4, the BOSS sends a Charging Notify Request to the CHF, and the Notification type is CDR file auditing. The BOSS acquires the address of the CHF, and fills in the Charging Notify Request, the Notification type and a list of CDR files to be audited, where the Notification type is filled in as CDR file re-acquisition, such that the BOSS sends the Charging Notify Request to the CHF.

At S4a, the BOSS calls an Nchf_ChargingExposure service of the CHF, and the call mode is CDR file auditing.

At S5, the CHF performs CDR file auditing. After receiving the Notify message, the CHF forwards the Charging Notify Request message to the CNF in response to the Notification type being identified as a CDR file auditing message, and the CNF acquires the information of CDR files to be audited, where the information of the CDR files to be audited can include but is not limited to: the name, size, number and modification time of CDR files; and
At S6, the CHF sends a Charging Notify Response to the BOSS, and returns CDR file auditing information, and the BOSS verifies the correctness of the acquired CDR files according to the CDR file auditing information.

At S6a, the CHF sends an Nchf_ChargingExposure service call completion response to the BOSS, and returns the CDR file auditing information, and the BOSS verifies the correctness of the acquired CDR files.

Referring to Fig. 12, in practical application, the CDR file processing method provided by this application also includes subscriber CDR auditing, which can be realized through Notify or service calling, where subscriber CDR auditing through Notify at least includes the following steps 1, 2, 3, 4, 5, 6. Subscriber CDR auditing through service calling at least includes the following steps 1, 2, 3, 4a, 6a.
1. The UE accesses the (R)AN network and establishes a PDU session, reports charging information and transmits the same to the CHF, and the CHF receives the message to construct a CDR and generates CDR files.
2. The CHF transmits the CDR files to the BOSS through a Bx interface.
3. The BOSS acquires subscriber CDR auditing information. While processing charging CDRs, the BOSS audits suspicious subscriber CDRs and triggers a subscriber CDR auditing request.
4. The BOSS sends a Charging Notify Request to the CHF, and the Notification type is subscriber CDR auditing. The BOSS acquires the address of the CHF, and fills in the Charging Notify Request, the Notification type and subscriber information to be audited, where the Notification type is filled in as subscriber CDR auditing, and the subscriber information can be subscriber number segment.
4a. The BOSS calls an Nchf_ChargingExposure service of the CHF, and the call mode is subscriber CDR auditing.
5. The CHF performs subscriber CDR auditing. After receiving the Notify message, the CHF forwards the Charging Notify Request message to the CNF in response to the Notification type being identified as a subscriber CDR auditing message, and the CNF acquires subscriber charging information to be audited, where the subscriber charging information to be audited can include, but is not limited to: service ID, rating group, session duration and traffic information.
6. The CHF sends a Charging Notify Response to the BOSS, and returns the subscriber charging information to be audited, and the BOSS verifies the correctness of the subscriber charging information according to the subscriber charging information.
6a. The CHF sends an Nchf_ChargingExposure service call completion response to the BOSS, and returns the subscriber charging information to be audited, and the BOSS verifies the correctness of the subscriber charging information according to the subscriber charging information.

The CDR file processing method proposed in this embodiment of the present invention can be realized by the CNF entity and the BOSS, or by the CHF entity and the BOSS, such that the erroneous CDR files can be recovered, CDR collection and CDR inquiry can be realized, and the real-time performance and accuracy of subsequent charging can be improved. In addition, CDR file recovery, CDR file auditing and subscriber CDR auditing can also be realized through the CNF entity and the BOSS, or through the CHF entity and the BOSS, so as to further improve the accuracy of subsequent charging.

As a non-transitory computer-readable storage medium, the memory can be configured to store a non-transitory software program and a non-transitory computer-executable program. In addition, the memory may include a high-speed random access memory and a non-transitory memory, for example, at least one magnetic disk storage device, a flash memory device, or another non-transitory solid-state storage device. In some embodiments, the memory may include memories remotely located with respect to the processor, and these remote memories may be connected to the processor via a network. Examples of the above-mentioned network include the Internet, an intranet, a local area network, a mobile communication network, and a combination thereof.

The embodiments described in the present invention are for clearly describing the technical schemes of the present invention, and do not constitute a limitation on the technical schemes provided by the embodiments of the present invention. Those having ordinary skill in the art may understand that, with evolution of the technique and emergence of new application scenarios, the technical schemes provided by the embodiments of the present invention are also applicable to similar technical problems.

Those having ordinary skill in the art may understand that the network function entities shown in Fig. 5 does not impose a limitation on the embodiments of the present invention and other embodiments may include more or fewer network function entities than illustrated, or combine some of the network function entities, or include different network function entities. The CDR file processing method shown in Fig. 6 or 7 does not constitute a limitation on the embodiment of the present invention, and can include more or fewer steps than those shown, or combine some steps, or have different steps.

An embodiment of the present invention also provides a CDR file processing device, which includes a memory, a processor and a computer program stored in the memory and operable on the processor. When the computer program is executed by the processor, the above-described method steps 1 to 10 in Fig. 4, 601 to 604 in Fig. 6, 701 to 704 in Fig. 7, 1 to 5 in Fig. 8, 1 to 6 in Fig. 9, 1 to 6 in Fig. 10, 1 to 6a in Fig. 11, or 1 to 6a in Fig. 12 are implemented.

Non-transient software programs and instructions required to implement the CDR file processing method in the above embodiment are stored in the memory, which, when executed by the processor, cause the processor to implement the CDR file processing method in the above embodiment, for example, implement the above-described method steps 1 to 10 in Fig. 4, 601 to 604 in Fig. 6, 701 to 704 in Fig. 7, 1 to 5 in Fig. 8, 1 to 6 in Fig. 9, 1 to 6 in Fig. 10, 1 to 6a in Fig. 11, or 1 to 6a in Fig. 12.

The apparatus embodiments described above are only for illustration. The units described as separate components may or may not be physically separated, that is, they may be located at one place or distributed to multiple network units. Some or all of the modules can be selected according to actual needs to achieve the purpose of this embodiment.

In addition, an embodiment of the present invention also provides a storage medium, which is a computer-readable storage medium, and the computer-readable storage medium stores computer-executable instructions, which are executed by a processor or controller, for example, by a processor in the above node embodiment, such that the processor executes the method for creating an intermediate point of a maintenance entity group in the above embodiment, for example, implement the above-described method steps 1 to 10 in Fig. 4, 601 to 604 in Fig. 6, 701 to 704 in Fig. 7, 1 to 5 in Fig. 8, 1 to 6 in Fig. 9, 1 to 6 in Fig. 10, 1 to 6a in Fig. 11 or 1 to 6a in Fig. 12.

According to the CNF entity, the CHF entity, the CDR processing method and device and the storage medium provided by the embodiments of the present invention, the CDR is constructed according to the charging message, the CDR files are generated according to the CDR, the CDR files are transmitted to the BOSS, the BOSS sends the recovery and re-acquisition request according to the CDR files, so as to acquire the list of erroneous CDR files according to the recovery and re-acquisition request sent by the BOSS, and recover all the erroneous CDR files in the list of erroneous CDR files from the backup CDR directory, such that the erroneous CDR files can be recovered, and then the BOSS can re-acquire the recovered CDR files, which helps improve the accuracy of subsequent charging according to the CDR files.

It can be understood by those having ordinary skill in the art that all or some of the steps of the methods, systems and functional modules/units in the devices disclosed above can be implemented as software, firmware, hardware and appropriate combinations thereof.

In a hardware embodiment, the division between the network function entities mentioned in the above description does not necessarily correspond to the division of physical components; for example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as an application-specific integrated circuit. Such software can be distributed on computer-readable media, which can include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and can include any information transmission media.

Some embodiments of the present invention have been described above with reference to the accompanying drawings and are not to limit the scope of the present invention. The scope of protection for the invention is defined by the appended claims.

## Claims

1. A call detail record, CDR, file processing method, which is applied to a charging function entity, the CDR file processing method comprising:
constructing a CDR according to a charging message, and generating CDR files according to the CDR (601);
transmitting the CDR files to a business and operation support system, BOSS (602), the BOSS being configured to process the received CDR files, sort the CDR files, and send a recovery and re-acquisition request to the charging function entity in response to sorting out an erroneous CDR file;
receiving a CDR file auditing request sent by the BOSS, the BOSS being configured to send the CDR file auditing request to the charging function entity according to the received CDR files;
obtaining CDR file auditing information according to CDR file information from the received CDR file auditing request;
returning the CDR file auditing information to the BOSS, the BOSS being configured to verify the correctness of the CDR files according to the CDR file auditing information returned by the charging function entity;
acquiring a list of erroneous CDR files according to the recovery and re-acquisition request sent by the BOSS (603); and
recovering all erroneous CDR files in the list of erroneous CDR files from a backup CDR file directory (604), the BOSS being configured to re-acquire the recovered CDR files.

2. The CDR file processing method of claim 1, further comprising:
receiving a subscriber CDR auditing request sent by the BOSS, wherein in response to the existence of a suspicious subscriber CDR, the BOSS sends the subscriber CDR auditing request to the charging function entity;
returning charging information of a subscriber for which auditing is to be performed to the BOSS according to the received subscriber CDR auditing request, the BOSS being configured to verify the charging information of the subscriber for which auditing is to be performed returned by the charging function entity.

3. A call detail record, CDR, file processing method, which is applied to a business and operation support system, BOSS, the CDR file processing method comprising:
receiving CDR files transmitted by a charging function entity (701);
sending a CDR file auditing request to the charging function entity according to the received CDR files, the charging function entity being configured to return CDR file auditing information according to the CDR file auditing request;
verifying the correctness of the CDR files according to the CDR file auditing information returned by the charging function entity;
processing the received CDR files to sort the CDR files (702);
sending a recovery and re-acquisition request to the charging function entity in response to sorting out an erroneous CDR file (703), the charging function entity being configured to acquire a list of erroneous CDR files according to the recovery and re-acquisition request and recover all erroneous CDR files in the list of erroneous CDR files from a backup CDR file directory; and
re-acquiring the recovered CDR files (704).

4. The CDR file processing method of claim 3, wherein the processing the received CDR files comprises:
in response to the existence of a suspicious subscriber CDR, sending a subscriber CDR auditing request to the charging function entity, the charging function entity being configured to return charging information of a subscriber for which auditing is to be performed according to the subscriber CDR auditing request; and
verifying the charging information of the subscriber for which auditing is to be performed returned by the charging function entity.

5. A charging notify function, CNF, entity, which is applied to a charging function entity, wherein the CNF entity is configured for communication connection with a business and operation support system, BOSS, and the CNF entity comprises a charging exposure service which is configured to be registered on a network repository function entity and to be called by the BOSS through the network repository function entity to implement the call detail record, CDR, file processing method according to any one of claims 1 to 2.

6. A charging function, CHF, entity for communication connection with a business and operation support system, BOSS, wherein the CHF entity comprises the CNF entity of claim 5.

7. A call detail record, CDR, file processing device, comprising a memory, a processor, a program stored in the memory and executable by the processor, and a data bus for realizing connection and communication between the processor and the memory, wherein the program, when executed by the processor, causes the processor to perform the CDR file processing method of any one of claims 1 to 2 or the CDR file processing method of any one of claims 3 to 4.

8. A computer-readable storage medium, storing one or more programs which are executable by one or more processors to implement the call detail record, CDR, file processing method of any one of claims 1 to 2 or the CDR file processing method of any one of claims 3 to 4.

## Patentansprüche

1. Dateiverarbeitungsverfahren für Verbindungsdatensatz, CDR, das auf eine Gebührenerhebungsfunktion-Stelle angewendet wird, das CDR-Dateiverarbeitungsverfahren umfassend:
Erstellen eines CDR gemäß einer Gebührenmeldung und Erzeugen von CDR-Dateien gemäß dem CDR (601);
Übertragen der CDR-Dateien an ein Geschäfts- und Betriebsunterstützungssystem, BOSS (602), wobei das BOSS konfiguriert ist, um die empfangenen CDR-Dateien zu verarbeiten, die CDR-Dateien zu sortieren und als Reaktion auf ein Aussortieren einer fehlerhaften CDR-Datei eine Wiederherstellungs- und Wiedererfassungsanforderung an die Gebührenerhebungsfunktion-Stelle zu senden;
Empfangen einer von dem BOSS gesendeten CDR-Dateiprüfungsanforderung, wobei das BOSS konfiguriert ist, um die CDR-Dateiprüfungsanforderung gemäß den empfangenen CDR-Dateien an die Gebührenerhebungsfunktion-Stelle zu senden;
Erlangen von CDR-Dateiprüfungsinformationen gemäß den CDR-Dateiinformationen aus der empfangenen CDR-Dateiprüfungsanforderung;
Zurückgeben der CDR-Dateiprüfungsinformationen an das BOSS, wobei das BOSS konfiguriert ist, um die Korrektheit der CDR-Dateien gemäß den CDR-Dateiprüfungsinformationen zu überprüfen, die von der Gebührenerhebungsfunktion-Stelle zurückgegeben werden;
Erfassen einer Liste fehlerhafter CDR-Dateien gemäß der von dem BOSS gesendeten Wiederherstellungs- und Wiedererfassungsanforderung (603); und
Wiederherstellen aller fehlerhaften CDR-Dateien in der Liste von fehlerhaften CDR-Dateien aus einem Verzeichnis für CDR-Sicherungsdateien (604), wobei das BOSS konfiguriert ist, um die wiederhergestellten CDR-Dateien erneut zu erfassen.

2. CDR-Dateiverarbeitungsverfahren nach Anspruch 1, ferner umfassend:
Empfangen einer vom BOSS gesendeten Teilnehmer-CDR-Prüfungsanforderung, wobei das BOSS als Reaktion auf das Vorhandensein eines verdächtigen Teilnehmer-CDR die Teilnehmer-CDR-Prüfungsanforderung an die Gebührenerhebungsfunktion-Stelle sendet;
Zurückgeben von Gebühreninformationen eines Teilnehmers, für den eine Prüfung durchgeführt werden soll, an das BOSS gemäß der empfangenen Teilnehmer-CDR-Prüfungsanforderung, wobei das BOSS konfiguriert ist, um die Gebühreninformationen des Teilnehmers, für den eine Prüfung durchgeführt werden soll, zu überprüfen, die von der Gebührenerhebungsfunktion-Stelle zurückgegeben werden.

3. Dateiverarbeitungsverfahren für Verbindungsdatensatz, CDR, das auf ein Geschäfts- und Betriebsunterstützungssystem, BOSS, angewendet wird, das CDR-Dateiverarbeitungsverfahren umfassend:
Empfangen von CDR-Dateien, die von einer Gebührenerhebungsfunktion-Stelle (701) übertragen werden;
Senden einer CDR-Dateiprüfungsanforderung an die Gebührenerhebungsfunktion-Stelle gemäß den empfangenen CDR-Dateien, wobei die Gebührenerhebungsfunktion-Stelle konfiguriert ist, um CDR-Dateiprüfungsinformationen gemäß der CDR-Dateiprüfungsanforderung zurückzugeben;
Überprüfen der Korrektheit der CDR-Dateien gemäß den CDR-Dateiprüfungsinformationen, die von der Gebührenerhebungsfunktion-Stelle zurückgegeben werden;
Verarbeiten der empfangenen CDR-Dateien, um die CDR-Dateien zu sortieren (702);
Senden einer Wiederherstellungs- und Wiedererfassungsanforderung an die Gebührenerhebungsfunktion-Stelle als Reaktion auf ein Aussortieren einer fehlerhaften CDR-Datei (703), wobei die Gebührenerhebungsfunktion-Stelle konfiguriert ist, um eine Liste fehlerhafter CDR-Dateien gemäß der Wiederherstellungs- und Wiedererfassungsanforderung zu erfassen und alle fehlerhaften CDR-Dateien in der Liste fehlerhafter CDR-Dateien aus einem CDR-Dateiverzeichnis wiederherzustellen; und Wiedererfassen der wiederhergestellten CDR-Dateien (704).

4. CDR-Dateiverarbeitungsverfahren nach Anspruch 3, wobei das Verarbeiten der empfangenen CDR-Dateien Folgendes umfasst:
als Reaktion auf das Vorhandensein eines verdächtigen Teilnehmer-CDR, Senden einer Teilnehmer-CDR-Prüfungsanforderung an die Gebührenerhebungsfunktion-Stelle, wobei die Gebührenerhebungsfunktion-Stelle konfiguriert ist, um Gebührenerhebungsinformationen eines Teilnehmers zurückzugeben, für den eine Prüfung gemäß der Teilnehmer-CDR-Prüfungsanforderung durchgeführt werden soll; und
Überprüfen der Gebühreninformationen des Teilnehmers, für den eine Prüfung durchgeführt werden soll, die von der Gebührenerhebungsfunktion-Stelle zurückgegeben werden.

5. Stelle für Gebührenbenachrichtigungsfunktion, CNF, die auf eine Gebührenerhebungsfunktion-Stelle angewendet wird, wobei die CNF-Stelle für eine Kommunikationsverbindung mit einem Geschäfts- und Betriebsunterstützungssystem, BOSS, konfiguriert ist und die CNF-Stelle einen Gebührenfreigabedienst umfasst, der konfiguriert ist, um auf einer Netzspeicherfunktion-Stelle registriert zu sein und von dem BOSS über die Netzspeicherfunktion-Stelle aufgerufen wird, um das Dateiverarbeitungsverfahren für Verbindungsdatensatz, CDR, nach einem der Ansprüche 1 bis 2 zu implementieren.

6. Stelle für Erhebungsfunktion, CHF, zur Kommunikationsverbindung mit einem Geschäfts- und Betriebsunterstützungssystem, BOSS, wobei die CHF-Stelle die CNF-Stelle von Anspruch 5 umfasst.

7. Dateiverarbeitungsvorrichtung für Verbindungsdatensatz, CDR, umfassend einen Speicher, einen Prozessor, ein in dem Speicher gespeichertes und von dem Prozessor ausführbares Programm und einen Datenbus zum Realisieren einer Verbindung und Kommunikation zwischen dem Prozessor und dem Speicher, wobei das Programm, wenn es von dem Prozessor ausgeführt wird, den Prozessor veranlasst, das CDR-Dateiverarbeitungsverfahren nach einem der Ansprüche 1 bis 2 oder das CDR-Dateiverarbeitungsverfahren nach einem der Ansprüche 3 bis 4 durchzuführen.

8. Computerlesbares Speichermedium, auf dem ein oder mehrere Programme gespeichert sind, die von einem oder mehreren Prozessoren ausführbar sind, um das Dateiverarbeitungsverfahren für Verbindungsdatensatz, CDR, nach einem der Ansprüche 1 bis 2 oder das CDR-Dateiverarbeitungsverfahren nach einem der Ansprüche 3 bis 4 zu implementieren.

## Revendications

1. Procédé de traitement de fichier d'historique détaillé d'appels, CDR, appliqué à une entité chargée de la facturation, le procédé de traitement de fichier CDR comprenant :
la construction d'un CDR conformément à un message de facturation, et la génération de fichiers CDR conformément au CDR (601) ;
la transmission des fichiers CDR à un système d'assistance aux activités commerciales et aux opérations, BOSS (602), le BOSS étant configuré pour traiter les fichiers CDR reçus, trier les fichiers CDR et envoyer une demande de récupération et de recouvrement à l'entité chargée de la facturation en réponse au tri d'un fichier CDR erroné ;
la réception d'une demande d'audit de fichier CDR envoyée par le BOSS, le BOSS étant configuré pour envoyer la demande d'audit de fichier CDR à l'entité chargée de la facturation conformément aux fichiers CDR reçus ;
l'obtention d'informations d'audit de fichier CDR conformément aux informations contenues dans le fichier CDR à partir de la demande d'audit de fichier CDR reçue ;
le renvoi des informations d'audit de fichier CDR au BOSS, le BOSS étant configuré pour vérifier l'exactitude des fichiers CDR conformément aux informations d'audit de fichier CDR renvoyées par l'entité chargée de la facturation ;
l'acquisition d'une liste de fichiers CDR erronés conformément à la demande de récupération et de recouvrement envoyée par le BOSS (603) ; et
la récupération de tous les fichiers CDR erronés figurant dans la liste des fichiers CDR erronés à partir d'un répertoire de fichier CDR de sauvegarde (604), le BOSS étant configuré pour recouvrer les fichiers CDR récupérés.

2. Procédé de traitement de fichier CDR selon la revendication 1, comprenant en outre :
la réception d'une demande d'audit de l'historique détaillé d'appels CDR d'un abonné envoyée par le BOSS, dans lequel, en réponse à l'existence d'un CDR d'abonné suspect, le BOSS envoie la demande d'audit du CDR de l'abonné à l'entité chargée de la facturation ;
le renvoi des informations de facturation d'un abonné sujet à un audit vers le BOSS conformément à la demande d'audit du CDR de l'abonné reçue, le BOSS étant configuré pour vérifier les informations de facturation de l'abonné sujet à un audit renvoyées par l'entité chargée de la facturation.

3. Procédé de traitement de fichier d'historique détaillé d'appels CDR appliqué à un système d'assistance aux activités commerciales et aux opérations BOSS, le procédé de traitement de fichier CDR comprenant :
la réception des fichiers CDR transmis par une entité chargée de la facturation (701) ;
l'envoi d'une demande d'audit de fichier CDR à l'entité chargée de la facturation conformément aux fichiers CDR reçus, l'entité chargée de la facturation étant configurée pour renvoyer les informations d'audit de fichier CDR conformément à la demande d'audit de fichier CDR ;
la vérification de l'exactitude des fichiers CDR conformément aux informations d'audit du fichier CDR renvoyées par l'entité chargée de la facturation ;
le traitement des fichiers CDR reçus afin de trier les fichiers CDR (702) ;
l'envoi d'une demande de récupération et de recouvrement à l'entité chargée de la facturation en réponse au tri d'un fichier CDR erroné (703), l'entité chargée de la facturation étant configurée pour acquérir une liste de fichiers CDR erronés conformément à la demande de récupération et de recouvrement et de récupérer tous les fichiers CDR erronés de la liste de fichiers CDR erronés à partir d'un répertoire de fichier CDR de sauvegarde ; et
le recouvrement des fichiers CDR récupérés (704).

4. Procédé de traitement de fichier CDR selon la revendication 3, dans lequel le traitement des fichiers CDR reçus comprend :
en réponse à l'existence d'un CDR d'abonné suspect, l'envoi d'une demande d'audit de CDR de l'abonné à l'entité chargée de la facturation, l'entité chargée de la facturation étant configurée pour renvoyer les informations de facturation d'un abonné sujet à l'audit conformément à la demande d'audit de CDR de l'abonné ; et
la vérification des informations de facturation de l'abonné sujet à l'audit renvoyées par l'entité chargée de la facturation.

5. Entité chargée de la notification de facturation, CNF, appliquée à une entité chargée de la facturation, dans laquelle l'entité CNF est configurée pour établir une connexion de communication avec un système d'assistance aux activités commerciales et aux opérations, BOSS, et l'entité CNF comprend un service d'exposition de facturation configuré pour être enregistré sur une entité dépositaire de réseau et pour être appelé par le BOSS via l'entité dépositaire de réseau afin de mettre en œuvre le procédé de traitement du fichier d'historique détaillé d'appels, CDR, selon l'une quelconque des revendications 1 à 2.

6. Entité chargée de la facturation, CHF, permettant d'établir la connexion de communication avec un système d'assistance aux activités commerciales et aux opérations, BOSS, dans laquelle l'entité CHF comprend l'entité CNF selon la revendication 5.

7. Dispositif de traitement de fichier d'historique détaillé d'appels, CDR, comprenant une mémoire, un processeur, un programme stocké dans la mémoire et exécutable par le processeur, et un bus de données permettant d'établir la connexion et la communication entre le processeur et la mémoire, dans lequel le programme, lorsqu'il est exécuté par le processeur, amène le processeur à exécuter le procédé de traitement de fichier CDR selon l'une quelconque des revendications 1 à 2 ou le procédé de traitement de fichier CDR selon l'une quelconque des revendications 3 à 4.

8. Support de stockage lisible par ordinateur, stockant un ou plusieurs programmes exécutables par un ou plusieurs processeurs afin de mettre en œuvre le procédé de traitement de fichier d'historique détaillé d'appels, CDR, selon l'une quelconque des revendications 1 à 2 ou le procédé de traitement de fichier CDR selon l'une quelconque des revendications 3 à 4.
